# EUROPEAN PATENT SPECIFICATION

(11) **EP 4 372 836 B1**
(45) Date of publication and mention of the grant of the patent: **09.12.2026**
(21) Application number: 23192768.2
(22) Date of filing: 22.08.2023
(51) Int. Cl.: H01M 4/04, H01M 4/88

(54) **DRY ELECTRODE DOUBLE STEEL BELT APPARATUS FOR FORMING FREE-STANDING FILM AND FREE-STANDING FILM-FORMING METHOD THEREOF**
TROCKENELEKTRODEN-DOPPELSTAHLBANDVORRICHTUNG ZUR HERSTELLUNG EINER FREISTEHENDEN FOLIE UND FREISTEHENDES FOLIENFORMUNGSVERFAHREN DAFÜR
APPAREIL À DOUBLE BANDE D'ACIER À ÉLECTRODE SÈCHE POUR FORMER UN FILM AUTOPORTANT ET SON PROCÉDÉ DE FORMATION DE FILM AUTOPORTANT

(30) Priority: 25.08.2022 CN 202211028561
(43) Date of publication of application: 22.05.2024
(73) Proprietor: DG SSL Katop Automation Co., Ltd., 523808 DongGuan City Guangdong Province (CN)
(72) Inventor: XU, Longri, DongGuang City, Guangdong Province, 523808 (CN); CHEN, Ming, DongGuang City, Guangdong Province, 523808 (CN); LIU, Jiabing, DongGuang City, Guangdong Province, 523808 (CN); ZHOU, Yan, DongGuang City, Guangdong Province, 523808 (CN); ZHANG, Dong, DongGuang City, Guangdong Province, 523808 (CN); YU, Xuegang, DongGuang City, Guangdong Province, 523808 (CN)
(74) Representative: Metida

(56) References cited:
- WO-A1-2021/028619
- WO-A1-2022/032907
- CN-U- 218 505 283

## Description

### TECHNICAL FIELD

The present disclosure relates to the technical field of lithium battery manufacturing, in particular to a dry electrode double steel belt apparatus for forming free-standing films and a free-standing film-forming method thereof.

### BACKGROUND

At present, the dry electrode free-standing film of lithium battery is usually manufactured by a two-roll rolling mill. The two-roll rolling mill usually includes two opposite heating rollers. When manufacturing the dry electrode free-standing film of lithium battery, electrode powder is first added between the two heating rollers, and then the electrode powder is extruded into the electrode free-standing film under the rotation of the two heating rollers. In this way, there is a risk of failing to realize continuous production of the electrode free-standing film and of the electrode free-standing film being easily broken. And the formed electrode free-standing film needs to be repeatedly rolled by other rolling machines to realize thinning and correction of the electrode free-standing film, so as to obtain the electrode free-standing film with the required thickness. Therefore, the failure of forming a free-standing film at one-step calender and of carrying out mass production causes a lower working efficiency and a higher production cost.

WO2022/032907A1 discloses a rolling device and a membrane material laminating apparatus. The rolling device comprises: a conveying assembly, comprising a first conveying belt and a second conveying belt arranged opposite each other, with a conveying channel being formed between the first conveying belt and the second conveying belt for conveying at least two layers of a membrane material; and a double-roller assembly, comprising a first pressing roller and a second pressing roller, which can rotate around their own axis and are arranged opposite each other, with a rolling channel being formed between the first pressing roller and the second pressing roller for pressing the first conveying belt, the second conveying belt, and the at least two layers of the membrane material in the conveying channel. In this way, during the rolling and lamination of the at least two layers of the membrane material by means of the first pressing roller and the second pressing roller, the at least two layers of the membrane material are squeezed continuously by means of the first conveying belt and the second conveying belt, such that the at least two layers of the membrane material are maintained in a flattened state. The at least two layers of the membrane material are subjected to flat-pressing and rolling at the same time so as to prevent warping, wrinkling, dislocation, etc. of the membrane material during rolling, which is beneficial for ensuring that the appearance and precision of a finished product meet design requirements.

WO2021/028619A1 discloses an article for use in an electrochemical device, a method for making a dry film or an article for an electrochemical device. The method may comprise the steps of preparing a process mixture by mixing the ingredients present in process mixture in a mixer and then forming the process mixture into the film of an article of the invention in a film former. One or more of the reactive composites, may be produced by separately mixing one or more matrix materials and one or more reactive materials in a mixer to form a wet or dry reactive composite. The method may further comprise the step of applying the film to a final substrate. The film may be sheared during film forming and/or film application to fully or partially fibrillizes some or all of the one or more fibrillizable binders. An electrochemical device may comprise any of the process mixture, dry films or articles of the invention.

### SUMMARY

In order to overcome the shortcomings of the prior art, the present disclosure provides a dry electrode double steel belt apparatus for forming free-standing films and a free-standing film-forming method thereof, which realizes continuous production and one-step calender of a free-standing film that is not easy to break, achieving the mass production and thus improving the production efficiency and reducing the production cost.

The technical scheme adopted by the disclosure to solve the technical problems is described below.

The first aspect of the present disclosure provides a dry electrode double steel belt apparatus for forming free-standing films, which comprises a frame, a bottom steel belt mechanism, a top steel belt mechanism arranged above the bottom steel belt mechanism, a heating mechanism and a calendering mechanism. The bottom steel belt mechanism comprises a bottom driving roller, a bottom driven roller and a bottom steel belt sleeved on the bottom driving roller and the bottom driven roller, wherein the bottom driving roller and the bottom driven roller are respectively arranged on the frame, a feeding area is arranged above the bottom driven roller and the bottom steel belt, and a bottom heating module is arranged on one side of the bottom driven roller far from the bottom driving roller. The top steel belt mechanism comprises a top driving roller, a top driven roller and a top steel belt sleeved on the top driving roller and the top driven roller, wherein the top driving roller and the top driven roller are respectively arranged on the frame; the top driving roller corresponds to the bottom driving roller, the top driven roller is arranged between the top driving roller and the feeding area, and a gap exists between the top steel belt and the bottom steel belt, and the width of the gap gradually decreases along the direction from the top driven roller to the top driving roller; and a top heating module is arranged on one side of the top driven roller far from the top driving roller. The heating mechanism is arranged at the inner side of the bottom steel belt and below the top driven roller. The calendering mechanism is arranged between the bottom driving roller, the top driving roller and the top driven roller.

According to a preferred technical scheme, the bottom steel belt mechanism further comprises a bottom driving module for driving the bottom driving roller to rotate, wherein the bottom driving module comprises a bottom driving motor and a bottom reducer connected with the bottom driving motor, and the bottom reducer is connected with one end of the bottom driving roller.

According to a preferred technical scheme, the top steel belt mechanism further comprises a top driving module for driving the top driving roller to rotate, wherein the top driving module comprises a top driving motor and a top reducer connected with the top driving motor, and the top reducer is connected with one end of the top driving roller.

According to a preferred technical scheme, the bottom heating module comprises a bottom heating cover and a bottom heating tube, wherein the bottom heating cover surrounds the outer periphery of the bottom driven roller; one side of the bottom heating cover proximate to the bottom driven roller has an opening (or is opened) and does not contact with the bottom steel belt, and the opening corresponds to the bottom steel belt; and a bottom mounting part is arranged in the bottom heating cover, and the bottom heating tube is arranged in the bottom mounting part.

According to a preferred technical scheme, the top heating module comprises a top heating cover and a top heating tube, wherein the top heating cover surrounds the outer periphery of the top driven roller; one side of the top heating cover proximate to the top driven roller has an opening (or is opened) and does not contact with the top steel belt; the opening corresponds to the top steel belt, a top mounting part is arranged in the top heating cover, and the top heating tube is arranged in the top mounting part.

According to a preferred technical scheme, the heating mechanism comprises a bracket arranged on the frame and a heater arranged at a top end of the bracket, and the heater corresponds to the bottom steel belt and a gap exists between the heater and the bottom steel belt.

According to a preferred technical scheme, the heater is a ceramic heater.

According to a preferred technical scheme, the calendering mechanism comprises at least two two-roll calendering assemblies, namely a first two-roll calendering assembly and a second two-roll calendering assembly, and the first two-roll calendering assembly is arranged between the top driven roller and the second two-roll calendering assembly.

According to a preferred technical scheme, the first two-roll calendering assembly comprises a first bottom calendering roller, a first top calendering roller and two first driving modules, wherein the first top calendering roller and the first bottom calendering roller are arranged up and down oppositely; the first bottom calendering roller is arranged on the frame and is positioned at the inner side of the bottom steel belt and abuts against the bottom steel belt; the first bottom calendering roller is relatively fixed with the frame. The first top calendering roller is arranged on the frame, arranged at the inner side of the top steel belt and abutted against the top steel belt, and can slide up and down relative to the frame, and the two first driving modules are used for driving the first top calendering roller to slide up and down.

According to a preferred technical scheme, the first bottom calendering roller and the first top calendering roller are heating rollers.

According to a preferred technical scheme, the second two-roll calendering assembly comprises a second bottom calendering roller, a second top calendering roller and two second driving modules, wherein the second top calendering roller and the second bottom calendering roller are arranged up and down oppositely, and the second bottom calendering roller is arranged on the frame, arranged at the inner side of the bottom steel belt and abutted against the bottom steel belt, and the second bottom calendering roller is relatively fixed with the frame. The second top calendering roller is arranged on the frame, arranged at the inner side of the top steel belt and abutted against the top steel belt, and can slide up and down relative to the frame, and the two second driving modules are used for driving the second top calendering roller to slide up and down.

According to a preferred technical scheme, the second bottom calendering roller and the second top calendering roller are heating rollers.

The second aspect of the present disclosure provides a dry electrode double steel belt free-standing film-forming method, which comprises the following steps: driving the bottom driving roller to rotate, thereby rotating the bottom steel belt and the bottom driven roller, and synchronously driving the top driving roller to rotate in an opposite direction, thereby rotating the top steel belt and the top driven roller in an opposite direction; heating the bottom steel belt through the bottom heating module and heating the top steel belt through the top heating module; adding the electrode powder to the bottom steel belt through the feeding area, so as to heat the electrode powder through the bottom steel belt and drive the electrode powder to move towards the direction proximate to the bottom driving roller and the top driving roller through the bottom steel belt, and heating the bottom steel belt through a heating mechanism when the bottom steel belt drives the electrode powder to move towards the direction proximate to the bottom driving roller and the top driving roller; when the electrode powder enters the gap between the top steel belt and the bottom steel belt, the electrode powder is heated by the top steel belt and extruded by the top steel belt and the bottom steel belt, so that the electrode powder forms an electrode free-standing film, and the formed electrode free-standing film can move towards the direction proximate to the bottom driving roller and the top driving roller under the drive of the top steel belt and the bottom steel belt; and the electrode free-standing film is extruded by the calendering mechanism, so that the electrode free-standing film can be compacted, thinned and corrected, and the required electrode free-standing film can be obtained.

The present disclosure has the following beneficial effects: by arranging the bottom steel belt mechanism, the top steel belt mechanism, the heating mechanism and the calendering mechanism, continuous production and one-step calender of a free-standing film that is not easy to break through the electrode powder are realized, achieving the mass production and thus improving the production efficiency and reducing the production cost.

### BRIEF DESCRIPTION OF THE DRAWINGS

The disclosure will be further explained with the attached drawings and embodiments.
FIG. 1 is a schematic structural diagram of a dry electrode double steel belt apparatus for forming free-standing films according to an embodiment of the present disclosure;
FIG. 2 is a schematic structural diagram of the rear view of the dry electrode double steel belt apparatus for forming free-standing films according to FIG. 1;
FIG. 3 is a schematic front view of the dry electrode double steel belt apparatus for forming free-standing films according to FIG. 1;
FIG. 4 is a schematic sectional view of the dry electrode double steel belt apparatus for forming free-standing films according to FIG. 1; and
FIG. 5 is a schematic structural view of the dry electrode double steel belt apparatus for forming free-standing films according to FIG. 1 in the absence of the bottom steel belt, the top steel belt, the top driven roller, the bottom heating module and the top heating module.

### DETAILED DESCRIPTION

In the following, the concept, specific structure and technical effects of the disclosure will be clearly and completely described with embodiments and drawings, so as to fully explain the purpose, features and effects of the disclosure. Obviously, the described embodiment is only a part of the embodiment of the present disclosure. Based on the embodiment of the present disclosure, other embodiments obtained by those skilled in the art without creative labors are included in the protection scope of the present disclosure. In addition, all the coupling/connecting relationships involved in the disclosure do not mean that two components are directly connected, but that a better connection structure between the two components can be formed by adding or reducing connecting accessories according to specific implementation conditions. Various technical features in the disclosure can be combined interactively on the premise of not conflicting with each other.

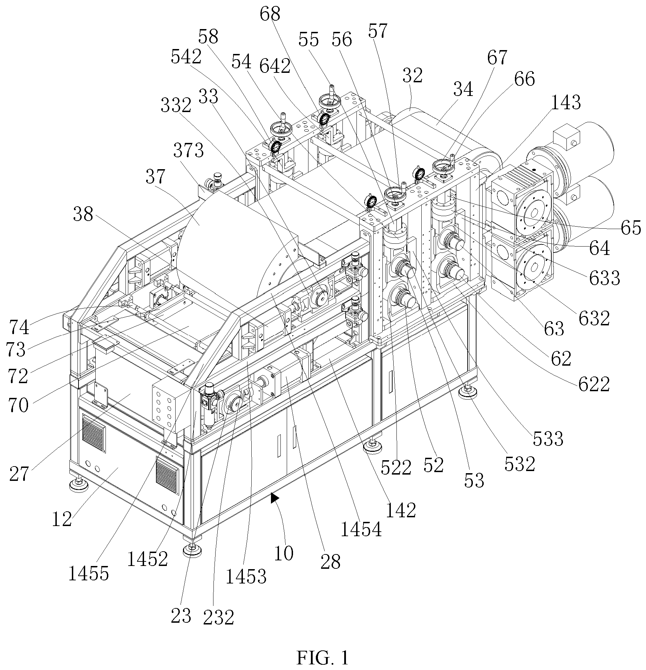

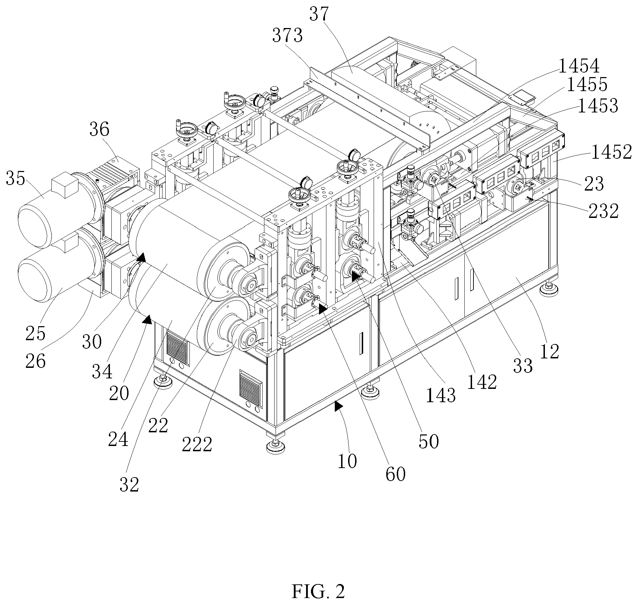

Referring to FIG. 1 to FIG. 5, according to an embodiment of the present disclosure, a dry electrode double steel belt apparatus for forming free-standing films includes a frame 10, a bottom steel belt mechanism 20, a top steel belt mechanism 30 arranged above the bottom steel belt mechanism 20, a heating mechanism 40 and a calendering mechanism. The bottom steel belt mechanism 20, the top steel belt mechanism 30, the heating mechanism 40 and the calendering mechanism are arranged on the frame 10.

As shown in FIG. 1 to FIG. 3, the frame 10 includes a base 12 and two side frames. The two side frames are respectively arranged at the front side and the rear side of the top end of the base 12.

Each side frame includes a mounting plate 142, a first part 143 and a second part, respectively. The mounting plates 142 of the two side frames are respectively arranged at the front side and the rear side of the top end of the base 12, and are oppositely arranged in front and rear. The first part 143 and the second part are arranged side by side along the length direction of the frame 10. The first part 143 is a rectangular frame with two openings, which is proximate to the left end of the base 12. The first part 143 has a first mounting space and a second mounting space, which are arranged side by side along the length direction of the frame 10. The first mounting space is proximate to the second part, and the second mounting space is arranged between the first mounting space and the left end of the base 12. The second part includes a vertical plate 1452, a bottom transverse plate 1453, a top transverse plate 1454 and an inclined plate 1455. The bottom transverse plate 1453 and the top transverse plate 1454 are sequentially arranged above the corresponding mounting plates 142. The vertical plate 1452 is arranged at the top end of the corresponding mounting plate 142. The vertical plate 1452 is arranged proximate to the right end of the base 12. One end of the bottom transverse plate 1453 is arranged at the right end of the first part 143, and the other end of the bottom transverse plate 1453 is arranged at the top end of the vertical plate 1452. One end of the top transverse plate 1454 is arranged at the right end of the first part 143, and the other end of the top transverse plate 1454 is arranged at the top end of the inclined plate 1455, and the bottom end of the inclined plate 1455 is arranged at the top end of the vertical plate 1452.

The top steel belt mechanism 20 includes a bottom driving roller 22, a bottom driven roller 23, a bottom steel belt 24 sleeved on the bottom driving roller 22 and the bottom driven roller 23, and a bottom driving module for driving the bottom driving roller 22 to rotate.

Both ends of the bottom driving roller 22 are respectively arranged at the left ends of the two first parts 143 with two bearing seats 222. Both ends of the bottom driven roller 23 are respectively arranged at the top ends of the two mounting plates 142 with two bearing seats 232. The bottom driving roller 22 is proximate to the left end of the base 12, and the bottom driven roller 23 is proximate to the right end of the base 12. The bottom driven roller 23 and the bottom driving roller 22 are of the same size, and the center of the bottom driven roller 23 and the center of the bottom driving roller 22 are horizontally arranged, so that the bottom steel belt 24 is horizontally arranged. The bottom driving module comprises a bottom driving motor 25 and a bottom reducer 26, wherein the bottom driving motor 25 is arranged on the bottom reducer 26, and the bottom reducer 26 is arranged at the left end of one of the first parts 143. The output end of the bottom driving motor 25 is connected with the input end of the bottom reducer 26, and the output end of the bottom reducer 26 is connected with one end of the bottom driving roller 22. As a driving roller, the bottom driving roller 22 can drive the bottom driven roller 23 to rotate under the action of the bottom steel belt 24 when the bottom driving motor 25 drives the bottom driving roller 22 to rotate through the bottom reducer 26. In this embodiment, the bottom driving roller 22 rotates in the counterclockwise direction, so that the bottom steel belt 24 rotates in the counterclockwise direction, that is, it circulates in the counterclockwise direction, and the bottom driven roller 23 also rotates in the counterclockwise direction.

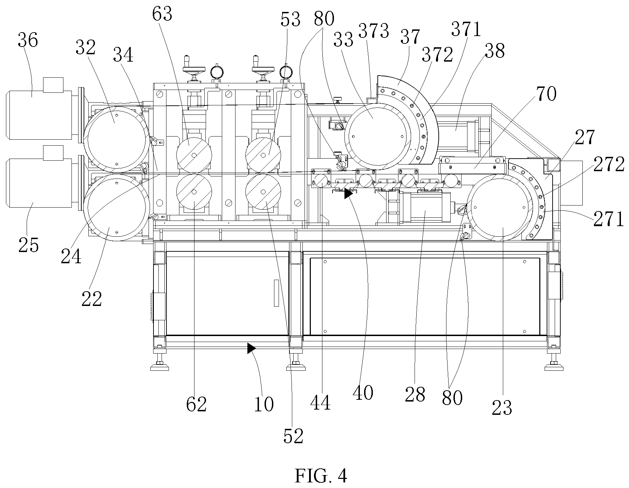

As shown in FIG. 1 and FIG. 4, a feeding area 70 is arranged above the bottom driven roller 23 and the bottom steel belt 24, and electrode powder (which is the positive and negative electrode materials of the dry electrode of lithium battery) can be added to the bottom steel belt 24 through the feeding area 70, so that the electrode powder can be driven to move towards the direction proximate to the bottom driving roller 22 and the top driving roller 32 through the bottom steel belt 24.

In this embodiment, two baffles 72 are arranged above the bottom driven roller 23 and the bottom steel belt 24, which are opposite to each other in front and rear. The length direction of the baffles 72 is the same as that of the frame 10, and the above-mentioned feeding area 70 is formed between the two baffles 72. The width of the feeding area 70 corresponds to the width of the bottom steel belt 24. The two baffles 72 are respectively arranged on two connecting plates 73, the top ends of the two connecting plates 73 are provided with two connecting rods 74, and the two ends of the connecting rods 74 are respectively arranged on the two bottom transverse plates 1453 of the second part.

The bottom driven roller 23 is provided with a bottom heating module on a side opposite to the bottom driving roller 22. The bottom heating module is used to heat the bottom steel belt 24, so that the electrode powder added to the bottom steel belt 24 through the feeding area 70 can be heated. The temperature of the bottom steel belt 24 to heat the electrode powder is 160-200°C, preferably 180°C, and the electrode powder can be heated through the bottom steel belt 24, so that the adhesive in the electrode powder can be activated and that the electrode powder can be extruded into a free-standing film at high temperature.

As shown in FIG. 1 and FIG. 4, the bottom heating module includes a bottom heating cover 27 and a bottom heating tube 272 arranged at the top end of the base 12. One side of the bottom heating cover 27 proximate to the bottom driven roller 23 has an arc surface, and the bottom heating cover 27 surrounds the outer periphery of the bottom driven roller 23 through the arc surface. The bottom heating cover 27 is slightly higher than the bottom steel belt 24 vertically. The side of the bottom heating cover 27 proximate to the bottom driven roller 23 has an opening (or is opened) which corresponds to the bottom steel belt 24. A gap exists between the side of the bottom heating cover 27 proximate to the driven roller 23 and the bottom steel belt 24, so that the bottom heating cover 27 is not in contact with the bottom steel belt 24. A bottom mounting part 271 is arranged in the bottom heating cover 27, and the bottom mounting part 271 is arc-shaped. Both ends of the bottom mounting part 271 are arranged on the inner walls of both sides of the bottom heating cover 27, and the bottom mounting part 271 surrounds the outer periphery of the bottom driven roller 23, and a gap exists between the bottom mounting part 271 and the bottom steel belt 24. A bottom heating tube 272, such as an electric heating tube, is arranged in the bottom mounting part 271. One end of the bottom heating tube 272 is used to connect with an external power supply through a wire, and a through hole for the wire to pass through is arranged on the outer wall of one side of the bottom heating cover 27. There are a plurality of bottom heating tubes 272, which are distributed at intervals along the circumferential direction of the bottom mounting part 271. The number of bottom heating tubes 272 can be adjusted according to actual needs. The bottom heating tube 272 generates heat after being electrified, so that the bottom steel belt 24 can be heated.

In this embodiment, both ends of the bottom driven roller 23 are slidably arranged at the top ends of the two mounting plates 142 with two bearing seats 232, respectively. Both ends of the bottom driven roller 23 can slide left and right at the top ends of the two mounting plates 142 with two bearing seats 232. Specifically, the top ends of the two mounting plates 142 are respectively provided with bottom slide rails, and the two bearing seats 232 are respectively slidably matched with the bottom slide rails on the two mounting plates 142 and can slide left and right along the corresponding bottom slide rails, thereby driving the bottom driven roller 23 to slide left and right.

The top ends of the two mounting plates 142 are respectively provided with bottom tensioning cylinders 28, and the cylinder shafts of the two bottom tensioning cylinders 28 are respectively connected with the two bearing seats 232, so that the two bearing seats 232 can be driven to slide left and right by the two bottom tensioning cylinders 28 and that the bottom driven roller 23 can be driven to slide left and right. The tension of the bottom steel belt 24 can be adjusted by the bottom tensioning cylinder 28, so that the bottom steel belt 24 can be tensioned.

The top steel belt mechanism 30 includes a top driving roller 32, a top driven roller 33, a top steel belt 34 sleeved on the top driving roller 32 and the top driven roller 33, and a top driving module for driving the top driving roller 32 to rotate.

Both ends of the top driving roller 32 are respectively arranged at the left ends of the two first parts 143 with two bearing seats 322. The top driving roller 32 corresponds to the bottom driving roller 22. The two ends of the top driven roller 33 are respectively arranged at the top ends of the bottom transverse plates 1453 of the two second parts with two bearing seats 332. The top driven roller 33 is arranged between the top driving roller 32 and the bottom driven roller 23. A gap exists between the top steel belt 34 and the bottom steel belt 24. The top driven roller 33 and the top driving roller 32 are of the same size, and the center of the top driven roller 33 is arranged above the center of the top driving roller 32, so that the top steel belt 34 is obliquely arranged relative to the bottom steel belt 24. Therefore, the width of the gap between the top steel belt 34 and the bottom steel belt 24 gradually decreases along the direction from the top driven roller 33 to the top driving roller 32. The top driving module comprises a top driving motor 35 and a top reducer 36, wherein the top driving motor 35 is arranged on the top reducer 36, and the top reducer 36 is arranged at the left end of one of the first parts 143. The output end of the top driving motor 35 is connected with the input end of the top reducer 36, and the output end of the top reducer 36 is connected with one end of the top driving roller 32. The top drive motor 35 corresponds to the bottom drive motor 25, and the top reducer 36 corresponds to the bottom reducer 26. The top driving roller 32 is a driving roller, the top driven roller 33 is a driven roller, and the top steel belt 34 is a synchronous strip. When the top driving motor 35 drives the top driving roller 32 to rotate through the top reducer 36, the top driven roller 33 can be driven to rotate under the action of the top steel belt 34. The rotation direction of the top driving roller 32 is opposite to that of the bottom driving roller 22, so that the rotation direction of the top steel belt 34 is opposite to that of the bottom steel belt 24, and the rotation direction of the top driven roller 33 is opposite to that of the bottom driven roller 23. In this embodiment, the top driving roller 32 rotates in the clockwise direction, so that the top steel belt 34 rotates in the clockwise direction, that is, it circulates in the clockwise direction, and the top driven roller 33 also rotates in the clockwise direction. The rotation speed of the top driving roller 32 is the same as that of the bottom driving roller 22, so that the rotation speed of the top steel belt 34 is the same as that of the bottom steel belt 24, and that the rotation speed of the top driven roller 33 is the same as that of the bottom driven roller 23. In practical application, when the electrode powder, driven by the bottom steel belt 24, enters the gap between the top steel belt 34 and the bottom steel belt 24, the electrode powder can be extruded by the interaction between the top steel belt 34 and the bottom steel belt 24, so that the electrode powder forms an electrode free-standing film, and that the formed electrode free-standing film, driven by the top steel belt 34 and the bottom steel belt 24, can move towards the direction proximate to the top driving roller 32 and the bottom driving roller 22.

A side of the top driven roller 33 opposite to the top driving roller 32 is provided with a top heating module. The top heating module is used to heat the top steel belt 34, so that when the electrode powder, driven by the bottom steel belt 24, enters the gap, the electrode powder can be heated by the top steel belt 34 at a temperature of 160-200°C, preferably of 180°C, and the electrode powder can be heated by the top steel belt 34, so that the adhesive in the electrode powder can be activated, facilitating for the electrode powder to be extruded into a free-standing film at high temperature.

As shown in FIG. 4, the top heating module includes a top heating cover 37 and a top heating tube 372. The top heating cover 37 is arc-shaped and surrounds the outer periphery of the top driven roller 33. The top heating cover 37 is slightly higher than the top steel belt 34 vertically. One side of the top heating cover 37 proximate to the top driven roller 33 has an opening (or is opened), which corresponds to the top steel belt 34. A gap exists between the side of the top heating cover 37 proximate to the driven roller 33 and the top steel belt 34, so that the top heating cover 37 is not in contact with the top steel belt 34. The top heating cover 37 is arranged at the top ends of the top transverse plates 1454 of the two second parts with mounting pieces 373, as shown in FIG. 1 and FIG. 4. The top heating cover 37 is provided with a top mounting part 371, which is arc-shaped. Both ends of the top mounting part 371 are arranged on the inner walls of both sides of the top heating cover 37, and the top mounting part 371 surrounds the outer periphery of the top driven roller 33, and a gap exists between the top mounting part 371 and the top steel belt 34. The top heating tube 372, such as an electric heating tube, is arranged in the top mounting part 371. One end of the top heating tube 372 is used for connecting with an external power supply through a wire, and a through hole for the wire to pass through is arranged on the outer wall of one side of the top heating cover 37. There are a plurality of top heating tubes 372, which are distributed at intervals along the circumferential direction of the top mounting part 371. The number of top heating tubes 372 can be adjusted according to actual needs. The top heating tube 372 generates heat after being electrified, so that the top steel belt 34 can be heated.

In this embodiment, both ends of the top driven roller 33 are slidably arranged at the top ends of the bottom transverse plates 1453 of the two second parts with two bearing seats 332 respectively. The two ends of the top driven roller 33 can slide left and right at the top ends of the bottom transverse plates 1453 of the two second parts with two bearing seats 332. Specifically, the top ends of the bottom transverse plates 1453 of the two second parts are respectively provided with top slide rails, and the two bearing seats 332 are respectively slidably matched with the top slide rails on the bottom transverse plates 1453 of the two second parts and can slide left and right along the corresponding top slide rail, thereby driving the top driven roller 33 to slide left and right.

The top ends of the bottom transverse plates 1453 of the two second parts are respectively provided with top tensioning cylinders 38, and the cylinder shafts of the two top tensioning cylinders 38 are respectively connected with the two bearing seats 332, so that the two bearing seats 332 can be driven to slide left and right by the two top tensioning cylinders 38, and that the top driven roller 33 can be driven to slide left and right. The tension of the top steel belt 34 can be adjusted by the top tensioning cylinder 38, so that the top steel belt 34 can be tensioned.

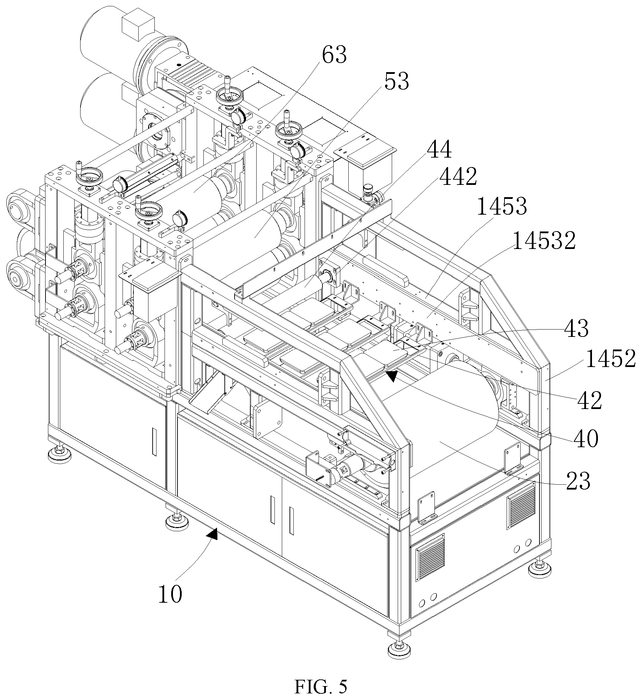

As shown in FIG. 4 and FIG. 5, the heating mechanism 40 is arranged at the inner side of the bottom steel belt 24 and below the top driven roller 33. The heating mechanism 40 is used to heat the bottom steel belt 24. The heating mechanism 40 heats the bottom steel belt 24 at a temperature of 160-200°C, preferably of 180°C. During the process that the bottom steel belt 24 drives the electrode powder to move towards the direction proximate to the bottom driving roller 22 and the top driving roller 32, the bottom steel belt 24 is heated by the heating mechanism 40. Therefore, the electrode powder can be heated by the bottom steel belt 24, so that the temperature of the electrode powder can be kept constant, and that the electrode powder can be extruded into a free-standing film by the top steel belt 34 and the bottom steel belt 24.

In this embodiment, there are three heating mechanisms 40, and the three heating mechanisms 40 are sequentially arranged at intervals in the direction proximate to the bottom driving roller 22. It can be understood that the number of heating mechanisms 40 can be adjusted according to actual needs. Among the three heating mechanisms 40, the first heating mechanism 40 is proximate to the left end of the feeding area 70, the second heating mechanism 40 is arranged below the top driven roller 33, and the third heating mechanism 40 is arranged on the side of the top driven roller 33 opposite to the top heating cover 37.

The heating mechanism 40 includes a bracket 42 and a square heater 43 arranged at the top end of the bracket 42. Both ends of the bracket 42 are respectively arranged on two transverse connecting plates 14532, which are respectively arranged on two bottom transverse plates 1453 of the two second parts. There are three heaters 43, which are arranged side by side along the length direction of the bracket 42. It can be understood that the number of heaters 43 can be adjusted according to actual needs.

The heater 43 is preferably a ceramic heater, and the bottom steel belt 24 can be heated by the ceramic heater. It should be appreciated that the heater 43 can also be other types of heaters.

In this embodiment, four passing rollers 44 are arranged in sequence along the direction from the bottom driven roller 23 to the bottom driving roller 22. As shown in FIG. 4, the bottom steel belt 24 passes through the four passing rollers 44, which are proximate to the bottom driven roller 23 to support the bottom steel belt 24. After the electrode powder is added to the bottom steel belt 24 through the feeding area 70, the bottom steel belt 24 will generally deform downward under the gravity of the electrode powder. In order to address the problem of deformation of the bottom steel belt 24, the four passing rollers 44 are provided to support the bottom steel belt 24, so that the bottom steel belt 24 can be ensured to be in a horizontal state. A heating mechanism 40 described above is arranged between two adjacent passing rollers 44. Two ends of the passing roller 44 are respectively arranged on two transverse connecting plates 14532 with two bearing seats 442. It should be appreciated that the number of passing rollers 44 can be adjusted according to actual needs.

As shown in FIG. 4, scraper plates 80 are respectively arranged at the bottom driving roller 22, the bottom driven roller 23, the top driving roller 32, the top driven roller 33, the inner side of the bottom steel belt 24 and the inner side of the top steel belt 34, and the arranged scraper plates 80 can scrape the electrode powder on the corresponding roller and on the inner side of the corresponding steel strip.

The calendering mechanism is arranged between the bottom driving roller 22, the top driving roller 32 and the top driven roller 33, and is used for extruding the electrode free-standing film to realize the compaction, thinning and correction of the electrode free-standing film.

Specifically, as shown in FIG. 1 to FIG. 4, the calendering mechanism includes two two-roll calendering assemblies, namely, a first two-roll calendering assembly and a second two-roll calendering assembly, and the first two-roll calendering assembly is arranged between the top driven roller 33 and the second two-roll calendering assembly.

The first two-roll calendering assembly includes a first bottom calendering roller 52, a first top calendering roller 53 and two first driving modules. The first top calendering roller 53 is arranged above the first bottom calendering roller 52 and is vertically opposite to the first bottom calendering roller 52. Both ends of the first bottom calendering roller 52 are fixedly arranged at the bottoms of the first mounting spaces of the two first parts 143 with two bearing seats 522, so that the first bottom calendering roller 52 is relatively fixed with the frame 10. The first bottom calendering roller 52 is arranged at the inner side of the bottom steel belt 24 and abuts against the bottom steel belt 24. Both ends of the first top calendering roller 53 are slidably arranged on the inner walls of the first mounting spaces of the two first parts 143 with two bearing seats 532, and the first top calendering roller 53 can slide up and down in the first mounting spaces of the two first parts 143, so that the first top calendering roller 53 can slide up and down relative to the frame 10. Specifically, the left end and the right end of each bearing seat 532 are in sliding fit with two slide rails 533 respectively, and the two slide rails 533 are respectively arranged on two inner walls of the corresponding first mounting spaces, and each bearing seat 532 can slide up and down along the corresponding two slide rails 533, thereby driving the first top calendering roller 53 to slide up and down. The first top calendering roller 53 is arranged at the inner side of the top steel belt 34 and abuts against the top steel belt 34. In practical application, since the first bottom calendering roller 52 and the first top calendering roller 53 abut against the bottom steel belt 24 and the top steel belt 34 respectively, and the width of the gap between the top steel belt 34 and the bottom steel belt 24 gradually decreases along the direction from the top driven roller 33 to the top driving roller 32, so that the electrode free-standing film can be extruded for the first time by the first bottom calendering roller 52 and the first top calendering roller 53 to realize the first compaction, thinning and correction of the electrode free-standing film.

The first bottom calendering roller 52 and the first top calendering roller 53 are heating rollers, so that the bottom steel belt 24 and the top steel belt 34 can be heated by the first bottom calendering roller 52 and the first top calendering roller 53, and that the electrode free-standing film can be heated to activate the adhesive, facilitating for extruding the electrode free-standing film. One end of the first bottom calendering roller 52 and one end of the first top calendering roller 53 are respectively provided with conductive slip rings with conductive slip ring seats, and the heating tubes of the first bottom calendering roller 52 and the first top calendering roller 53 can be electrically connected with an external power supply through corresponding conductive slip rings, so that when the heating tubes of the first bottom calendering roller 52 and the first top calendering roller 53 are electrified, the bottom steel belt 24 and the top steel belt 34 can be heated.

The two first driving modules are used to drive the first top calendering roller 53 to slide up and down. The two first driving modules respectively correspond to the two bearing seats 532.

The first driving module includes a first connecting block 54, a first threaded rod nut 55, a first threaded rod 56 and a first driving member 57. The first connecting block 54 is arranged at the top end of the corresponding bearing seat 532. The top end of the first connecting block 54 is provided with an approximately rectangular mounting hole, and the bottom end of the first threaded rod nut 55 is arranged in the mounting hole. The first threaded rod 56 is threadedly engaged with the first threaded rod nut 55, and the first threaded rod 56 partially extends out of the top end of the first threaded rod nut 55. The top end of the first threaded rod 56 protrudes from the through hole at the top of the corresponding first mounting space and is connected with the first driving member 57. A bearing is arranged in the through hole, and the bearing is sleeved on the outer periphery of the first threaded rod 56 to provide rotational support for the first threaded rod 56. The first driving member 57 is a handwheel, and it should be appreciated that the first driving member 57 can also be a motor. In practical application, by rotating the handwheel, the first threaded rod 56 can be driven to rotate, and the rotation of the first threaded rod 56 can drive the first threaded rod nut 55 to move up and down, thus driving the first connecting block 54 to move up and down, further driving the corresponding bearing seat 532 to slide up and down along the corresponding two slide rails 533, and further driving the first top calendering roller 53 to slide up and down. In practical application, by sliding the first top calendering roller 53 up and down, the distance between the first top calendering roller 53 and the first bottom calendering roller 52 can be adjusted according to the required thickness of the electrode free-standing film, and then the width of the gap between the top steel belt 34 and the bottom steel belt 24 can be adjusted, so that when the electrode free-standing film is extruded by the first top calendering roller 53 and the first bottom calendering roller 52, the electrode free-standing film with the required thickness can be obtained.

The first connecting block 54 includes a connecting seat, a load sensor and a pressing plate which are arranged in sequence from bottom to top. The connecting seat, the load sensor and the pressing plate are of a circular shape, and the connecting seat is arranged at the top end of the corresponding bearing seat 532, and the top end of the pressing plate is provided with the above-mentioned mounting hole. The load sensor can measure the pressing force of the first bottom calendering roller 52 and the first top calendering roller 53 exerted on the electrode free-standing film.

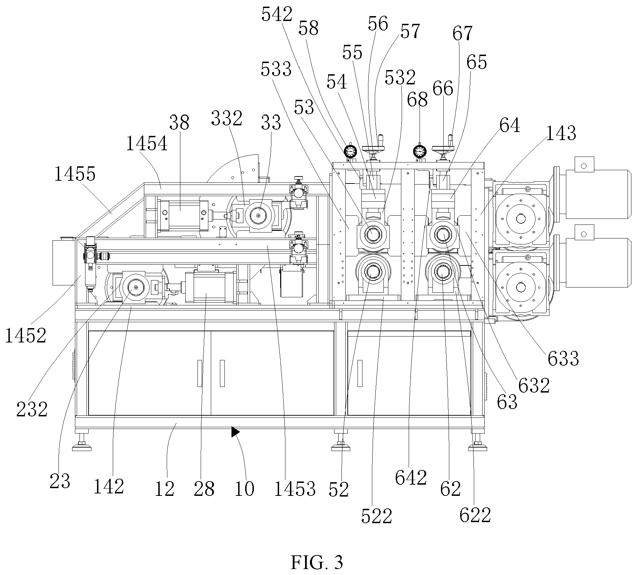

As shown in FIG. 1 and FIG. 3, the first two-roll calendering assembly further includes two first dial indicators 58, which are respectively arranged at the top ends of the two first parts 143. The top ends of the first connecting blocks 54 of the two first driving modules are respectively provided with two first connecting pieces 542, which are Z-shaped and arranged between the two first parts 143, and each first dial indicator 58 corresponds to one first connecting piece 542. The end of a measuring rod of the first dial indicator 58 abuts against the top end of the corresponding first connecting piece 542, and the up-and-down sliding distance of the first top calendering roller 53 can be measured by the first dial indicator 58, facilitating the operator to adjust an accurate distance between the first top calendering roller 53 and the first bottom calendering roller 52.

The first dial indicator 58 may be replaced by, for example, other dial indicators with different precision.

The structure of the second two-roll calendering assembly is the same as that of the first two-roll calendering assembly. The second two-roll calendering assembly includes a second bottom calendering roller 62, a second top calendering roller 63 and two second driving modules. The second top calendering roller 63 is arranged above the second bottom calendering roller 62 and is vertically opposite to the second bottom calendering roller 62. The two ends of the second bottom calendering roller 62 and the two ends of the second bottom calendering roller 62 are respectively fixedly arranged at the bottoms of the second mounting spaces of the two first parts 143 with two bearing seats 622, so that the second bottom calendering roll 62 is relatively fixed with the frame 10. The second bottom calendering roller 62 is arranged at the inner side of the bottom steel belt 24 and abuts against the bottom steel belt 24. Two ends of the second top calendering roller 63 are slidably arranged on the inner walls of the second mounting spaces of the two first parts 143 through two bearing seats 632, and the second top calendering roller 63 can slide up and down in the second mounting spaces of the two first parts 143, so that the second top calendering roller 63 can slide up and down relative to the frame 10. Specifically, the left end and the right end of each bearing seat 632 are in sliding fit with two slide rails 633 respectively, and the two slide rails 633 are respectively arranged on the two inner walls of the corresponding second mounting spaces, and each bearing seat 632 can slide up and down along the corresponding two slide rails 633, thereby driving the second top calendering roller 63 to slide up and down. The second top calendering roller 63 is arranged at the inner side of the top steel belt 34 and abuts against the top steel belt 34. In practical application, the second bottom calendering roller 62 and the first top calendering roller 63 abut against the bottom steel belt 24 and the top steel belt 34 respectively, and the width of the gap between the bottom steel belt 24 and the top steel belt gradually decreases along the direction from the top driven roller 33 to the top driving roller 32, so that the electrode free-standing film can be extruded for the second time by the first bottom calendering roller 62 and the first top calendering roller 63 to realize the second compaction, thinning and correction of the thickness of the electrode free-standing film, and thus the required electrode free-standing film can be obtained.

The second bottom calendering roller 62 and the second top calendering roller 63 are heating rollers, so that the bottom steel belt 24 and the top steel belt 34 can be heated by the second bottom calendering roller 62 and the second top calendering roller 63, and that the electrode free-standing film can be heated to activate the adhesive, facilitating for extruding the electrode free-standing film. One end of the second bottom calendering roller 62 and one end of the second top calendering roller 63 are respectively provided with conductive slip rings through conductive slip ring seats, and the heating tubes of the second bottom calendering roller 62 and the second top calendering roller 63 can be electrically connected with an external power supply through corresponding conductive slip rings. When the heating tubes of the second bottom calendering roller 62 and the second top calendering roller 63 are electrified, the bottom steel belt 24 and the top steel belt 34 can be heated.

Two second drive modules are used to drive the second top calendering roller 63 to slide up and down. The two second driving modules correspond to the two bearing seats 632, respectively.

The second driving module includes a second connecting block 64, a second threaded rod nut 65, a second threaded rod 66 and a second driving member 67. The second connecting block 64 is arranged at the top end of the corresponding bearing seat 632. The top end of the second connecting block 64 is provided with an approximately rectangular mounting hole, and the bottom end of the second threaded rod nut 65 is arranged in the mounting hole. The second threaded rod 66 is threadedly engaged with the second threaded rod nut 65. The second threaded rod 66 partially extends out of the top end of the second threaded rod nut 65, and the top end of the threaded rod 66 protrudes from the through hole at the top of the corresponding second mounting space and is connected with the second driving member 67. A bearing is arranged in the through hole, and the bearing is sleeved on the periphery of the second threaded rod 66 to provide rotational support for the second threaded rod 66. The second driving member 67 is a handwheel, and it should be appreciated that the second driving member 67 can also be a motor. In practical application, by rotating the handwheel, the second threaded rod 66 can be driven to rotate, and the rotation of the second threaded rod 66 can drive the second threaded rod nut 65 to move up and down, thus driving the second connecting block 64 to move up and down, further driving the corresponding bearing seat 632 to slide up and down along the corresponding two slide rails 633, and further driving the second top calendering roller 63 to slide up and down. In practical application, by sliding the second top calendering roller 63 up and down, the distance between the second top calendering roller 63 and the second bottom calendering roller 62 can be adjusted according to the actual required thickness of the electrode free-standing film, and then the width of the gap between the top steel belt 34 and the bottom steel belt 24 can be adjusted, so that when the electrode free-standing film is extruded by the second top calendering roller 63 and the second bottom calendering roller 62, the electrode free-standing film with the required thickness can be obtained.

The second connecting block 64 includes a connecting seat, a load sensor and a pressing plate which are arranged in sequence from bottom to top. The connecting seat, the load sensor and the pressing plate are all of a circular shape, and the connecting seat is arranged at the top end of the corresponding bearing seat 632, and the top end of the pressing plate is provided with the above-mentioned mounting hole. The load sensor can measure the pressing force of the second bottom calendering roller 62 and the second top calendering roller 63 exerted on the electrode free-standing film.

As shown in FIG. 1 and FIG. 3, the second two-roll calendering assembly further includes two second dial indicators 68, which are respectively arranged at the top ends of the two first parts 143. The top ends of the second connecting blocks 64 of the two second driving modules are respectively provided with two second connecting pieces 642, which are Z-shaped and arranged between the two first parts 143, and each second dial indicator 68 corresponds to one second connecting piece 642. The end of a measuring rod of the second dial indicator 68 abuts against the top end of the corresponding second connecting piece 642, and the up-and-down sliding distance of the second top calendering roller 63 can be measured by the second dial indicator 68, facilitating the operator to adjust the accurate distance between the second top calendering roller 63 and the second bottom calendering roller 62.

The second dial indicator 68 may be replaced by, for example, other dial indicators with different precision.

It should be appreciated that, in other embodiments, the number of two-roll calendering assemblies can be three, four, or more than four, that is, the number of two-roll calendering assemblies can be adjusted according to actual needs.

From the above structure, the working principle of the disclosure is as follows: firstly, the bottom driving roller 22 is driven to rotate counterclockwise by the bottom driving module, so that the bottom steel belt 24 and the bottom driven roller 23 rotate counterclockwise, and at the same time, the top driving roller 32 is driven to rotate synchronously by the top driving module, so that the top steel belt 34 and the top driven roller 33 rotate clockwise. The bottom steel belt 24 and the top steel belt 34 are heated by the bottom heating module and the top heating module respectively. Secondly, the electrode powder is added to the bottom steel belt 24 through the feeding area 70. With the bottom steel belt 24 being heated by the bottom heating module, the electrode powder is heated by the bottom steel belt 24 to activate the adhesive in the electrode powder. Meanwhile, the electrode powder can be driven to move towards the direction proximate to the bottom driving roller 22 and the top driving roller 32 by the bottom steel belt 24, and the bottom steel belt 24 is heated by the heating mechanism 40 during the process of driving the electrode powder to move towards the direction proximate to the bottom driving roller 22 and the top driving roller 32, so that the electrode powder can be heated by the bottom steel belt 24 at a constant temperature. When the electrode powder enters the gap between the top steel belt 34 and the bottom steel belt 24, as the top steel belt 34 is heated by the top heating module, the electrode powder can be heated by the top steel belt 34 to activate the adhesive in the electrode powder, and at the same time, the electrode powder is extruded by the top steel belt 34 and the bottom steel belt 24 to form an electrode free-standing film. The formed electrode free-standing film can be driven by the top steel belt 34 and the bottom steel belt 24 to move towards the direction proximate to the bottom driving roller 22 and the top driving roller 32. Thirdly, during the movement of the electrode free-standing film, the electrode free-standing film is first extruded by the first bottom calendering roller 52 and the first top calendering roller 53 of the first two-roll calendering assembly. Since the width of the gap between the top steel belt 34 and the bottom steel belt 24 gradually decreases along the direction from the top driven roller 33 to the top driving roller 32, the electrode free-standing film can be compacted, thinned and corrected for the first time by the first bottom calendering roller 52 and the first top calendering roller 53. Next, the electrode free-standing film is extruded for the second time by the second bottom calendering roller 62 and the second top calendering roller 63 of the second two-roll calendering assembly, so that the electrode free-standing film can be compacted, thinned and corrected for the second time, and the required electrode free-standing film can be obtained. Besides, during the extrusion of the electrode free-standing film by the first bottom calendering roller 52 and the first top calendering roller 53 and during the extrusion of the electrode free-standing film by the second bottom calendering roller 62 and the second top calendering roller 63, the electrode free-standing film can also be heated by the first bottom calendering roller 52 and the first top calendering roller 53, the second bottom calendering roller 62 and the second top calendering roller 63, so as to facilitate the extrusion of the electrode free-standing film.

According to the disclosure, with the combination of the bottom steel belt mechanism 20, the top steel belt mechanism 30, the heating mechanism 40 and the calendering mechanism, the present apparatus, with the use of electrode powder, realizes continuous production and one-step calender of a free-standing film that is not easy to break, achieving the mass production and thus improving the production efficiency and reducing the production cost.

Based on the dry electrode double steel belt apparatus for forming free-standing films, the disclosure also provides a dry electrode double steel belt free-standing film-forming method, which comprises the following steps:
step S1: driving the bottom driving roller 22 to rotate counterclockwise by the bottom driving motor 25 and the bottom reducer 26 of the bottom driving module, thereby rotating the bottom steel belt 24 and the bottom driven roller 23 counterclockwise; meanwhile, synchronously driving the top driving roller 33 to rotate in the opposite direction by the top driving motor 35 and the top reducer 36 of the top driving module, that is, clockwise, thereby rotating the top steel belt 34 and the top driven roller 33 in the opposite direction, that is, clockwise;
step S2, heating the bottom steel belt 24 by the bottom heating tube 272 of the bottom heating module, and heating the top steel belt 34 by the top heating tube 372 of the top heating module;
step S3: adding an electrode powder to the bottom steel belt 24 through a feeding area 70; as the bottom steel belt 24 is heated by the bottom heating module, the electrode powder can be heated by the bottom steel belt 24 to activate the adhesive in the electrode powder; meanwhile, driving the electrode powder to move towards the direction proximate to the bottom driving roller 22 and the top driving roller 32 by the bottom steel belt 24; and heating the electrode powder by the bottom steel belt 24 at a temperature of 160-200°C, preferably of 180°C.
during the process that the bottom steel belt 24 drives the electrode powder to move towards the direction proximate to the bottom driving roller 22 and the top driving roller 32, heating the bottom steel belt 24 by the heater 43 of the heating mechanism 40, so that the electrode powder can be heated by the bottom steel belt 24 at a constant temperature; and heating the bottom steel belt 24 by the heater 43 of the heating mechanism 40 at a temperature of 160-200°C, preferably of 180°C.
step S4: when the electrode powder enters the gap between the top steel belt 34 and the bottom steel belt 24, as the top steel belt 34 is heated by the top heating module, heating the electrode powder by the top steel belt 34 to activate the adhesive in the electrode powder; meanwhile, extruding the electrode powder by the top steel belt 34 and the bottom steel belt 24 to form an electrode free-standing film, and driving the formed electrode free-standing film by the top steel belt 34 and the bottom steel belt 24 to move towards the direction proximate to the bottom driving roller 22 and the top driving roller 32; and heating the electrode powder by the top steel belt 34 at a temperature of 160-200°C, preferably of 180°C.
step S5: during the movement of the electrode free-standing film, extruding the electrode free-standing film for the first time by the first bottom calendering roller 52 and the first top calendering roller 53 of the first two-roll calendering assembly of the calendering mechanism; since the width of the gap between the top steel belt 34 and the bottom steel belt 24 gradually decreases along the direction from the top driven roller 33 to the top driving roller 32, the electrode free-standing film can be compacted, thinned and corrected for the first time by the first bottom calendering roller 52 and the first top calendering roller 53; next, extruding the electrode free-standing film for the second time by the second bottom calendering roller 62 and the second top calendering roller 63 of the second two-roll calendering assembly of the calendering mechanism, so that the electrode free-standing film can be compacted, thinned and corrected for the second time to obtain the required electrode free-standing film.

## Claims

1. A dry electrode double steel belt apparatus for forming free-standing films comprises a frame (10), and is **characterized by** comprising a bottom steel belt mechanism (20), a top steel belt mechanism (30) arranged above the bottom steel belt mechanism (20), a heating mechanism (40) and a calendering mechanism;
the bottom steel belt mechanism (20) comprises a bottom driving roller (22), a bottom driven roller (23) and a bottom steel belt (24) sleeved on the bottom driving roller (22) and the bottom driven roller (23), wherein the bottom driving roller (22) and the bottom driven roller (23) are respectively arranged on the frame (10); a feeding area (70) is arranged above the bottom driven roller (23) and the bottom steel belt (24), and a bottom heating module is arranged on one side of the bottom driven roller (23) opposite to the bottom driving roller (22);
the top steel belt mechanism (30) comprises a top driving roller (32), a top driven roller (33) and a top steel belt (34) sleeved on the top driving roller (32) and the top driven roller (33), wherein the top driving roller (32) and the top driven roller (33) are respectively arranged on the frame (10), the top driving roller (32) corresponds to the bottom driving roller (22), the top driven roller (33) is arranged between the top driving roller (32) and the feeding area (70), and a gap exists between the top steel belt (34) and the bottom steel belt (24), and the width of the gap gradually decreases along the direction from the top driven roller (33) to the top driving roller (32); and a top heating module is arranged on one side of the top driven roller (33) opposite to the top driving roller (32);
the heating mechanism (40) is arranged at the inner side of the bottom steel belt (24) and below the top driven roller (33);
the calendering mechanism is arranged between the bottom driving roller (22), the top driving roller (32) and the top driven roller (33); and
the bottom heating module comprises a bottom heating cover (27) and a bottom heating tube (272), wherein the bottom heating cover (27) surrounds the outer periphery of the bottom driven roller (23), and one side of the bottom heating cover (27) proximate to the bottom driven roller (23) has an opening and does not contact with the bottom steel belt (24), and the opening corresponds to the bottom steel belt (24), and a bottom mounting part (271) is arranged in the bottom heating cover (27), and the bottom heating tube (272) is arranged in the bottom mounting part (271).

2. The dry electrode double steel belt apparatus for forming free-standing films according to claim 1, **characterized in that** the bottom steel belt mechanism (20) further comprises a bottom driving module for driving the bottom driving roller (22) to rotate, and the bottom driving module comprises a bottom driving motor (25) and a bottom reducer (26) connected with the bottom driving motor (25), and the bottom reducer (26) is connected with one end of the bottom driving roller (22).

3. The dry electrode double steel belt apparatus for forming free-standing films according to claim 1, **characterized in that** the top steel belt mechanism (30) further comprises a top driving module for driving the top driving roller (32) to rotate, and the top driving module comprises a top driving motor (35) and a top reducer (36) connected with the top driving motor (35), and the top reducer (36) is connected with one end of the top driving roller (32).

4. The dry electrode double steel belt apparatus for forming free-standing films according to claim 1, **characterized in that** the top heating module comprises a top heating cover (37) and a top heating tube (372), wherein the top heating cover (37) surrounds the outer periphery of the top driven roller (33), and one side of the top heating cover (37) proximate to the top driven roller (33) has an opening and does not contact with the top steel belt (34), and the opening corresponds to the top steel belt (34), and a top mounting part (371) is arranged in the top heating cover (37), and the top heating tube (372) is arranged in the top mounting part (371).

5. The dry electrode double steel belt apparatus for forming free-standing films according to claim 1, **characterized in that** the heating mechanism (40) comprises a bracket (42) arranged on the frame (10) and a heater (43) arranged at the top end of the bracket (42), and the heater (43) corresponds to the bottom steel belt (24) and a gap exists between the heater (43) and the bottom steel belt (24).

6. The dry electrode double steel belt apparatus for forming free-standing films according to claim 5, **characterized in that** the heater (43) is a ceramic heater.

7. The dry electrode double steel belt apparatus for forming free-standing films according to claim 1, **characterized in that** the calendering mechanism comprises at least two two-roll calendering assemblies, namely a first two-roll calendering assembly and a second two-roll calendering assembly, and the first two-roll calendering assembly is arranged between the top driven roller (33) and the second two-roll calendering assembly.

8. The dry electrode double steel belt apparatus for forming free-standing films according to claim 7, **characterized in that** the first two-roll calendering assembly comprises a first bottom calendering roller (52), a first top calendering roller (53) and two first driving modules, wherein the first top calendering roller (53) and the first bottom calendering roller (52) are oppositely arranged up and down, and the first bottom calendering roller (52) is arranged on the frame (10), arranged at the inner side of the bottom steel belt (24) and abutted against the bottom steel belt (24), and the first bottom calendering roller (52) is relatively fixed with the frame (10); the first top calendering roller (53) is arranged on the frame (10), arranged at the inner side of the top steel belt (34) and abutted against the top steel belt (34), and can slide up and down relative to the frame (10), and the two first driving modules are used for driving the first top calendering roller (53) to slide up and down.

9. The dry electrode double steel belt apparatus for forming free-standing films according to claim 8, **characterized in that** the first bottom calendering roller (52) and the first top calendering roller (53) are heating rollers.

10. The dry electrode double steel belt apparatus for forming free-standing films according to claim 7, **characterized in that** the second two-roll calendering assembly comprises a second bottom calendering roller (62), a second top calendering roller (63) and two second driving modules, wherein the second top calendering roller (63) and the second bottom calendering roller (62) are oppositely arranged up and down, and the second bottom calendering roller (62) is arranged on the frame (10), arranged at the inner side of the bottom steel belt and abutted against the bottom steel belt (24), and the second bottom calendering roller (62) is relatively fixed with the frame (10); the second top calendering roller (63) is arranged on the frame (10), arranged at the inner side of the top steel belt (34) and abutted against the top steel belt (34), and can slide up and down relative to the frame (10), and the two second driving modules are used for driving the second top calendering roller (63) to slide up and down.

11. The dry electrode double steel belt apparatus for forming free-standing films according to claim 10, **characterized in that** the second bottom calendering roller (62) and the second top calendering roller (63) are heating rollers.

12. A dry electrode double steel belt free-standing film-forming method using the dry electrode double steel belt apparatus for forming free-standing films according to claim 1, **characterized by** comprising the following steps:
driving a bottom driving roller (22) to rotate, thereby rotating a bottom steel belt (24) and a bottom driven roller (23), and synchronously driving a top driving roller (32) to rotate in an opposite direction, thereby rotating a top steel belt (34) and a top driven roller (33) in an opposite direction;
heating the bottom steel belt (24) through a bottom heating module and heating the top steel belt (34) through a top heating module;
adding an electrode powder to the bottom steel belt (34) through a feeding area (70), so as to heat the electrode powder through the bottom steel belt (34), driving the electrode powder to move towards the direction proximate to the bottom driving roller (22) and the top driving roller (32) through the bottom steel belt (24), and heating the bottom steel belt (24) through a heating mechanism (40) when the bottom steel belt (24) drives the electrode powder to move towards the direction proximate to the bottom driving roller (22) and the top driving roller (32);
heating the electrode powder by the top steel belt (34) when the electrode powder enters the gap between the top steel belt (34) and the bottom steel belt (24), extruding the electrode powder by the top steel belt (34) and the bottom steel belt (24) to form an electrode free-standing film, and the formed electrode free-standing film can move towards the direction proximate to the bottom driving roller (22) and the top driving roller (23) under the drive of the top steel belt (34) and the bottom steel belt (24); and
extruding the electrode free-standing film by a calendering mechanism, so that the electrode free-standing film can be compacted, thinned and corrected to obtain the required electrode free-standing film.

## Patentansprüche

1. Trockenelektroden-Doppelstahlbandvorrichtung zur Bildung selbsttragender Folien, die ein Gestell (10) umfasst, **dadurch gekennzeichnet, dass** sie eine untere Stahlbandbaugruppe (20), eine oberhalb der unteren Stahlbandbaugruppe (20) angeordnete obere Stahlbandbaugruppe (30), eine Heizeinrichtung (40) und eine Kalandriereinrichtung umfasst,
wobei die untere Stahlbandbaugruppe (20) eine untere Antriebswalze (22), eine untere Mitlaufwalze (23) und ein um die untere Antriebswalze (22) und die untere Mitlaufwalze (23) herumgeführtes unteres Stahlband (24) umfasst, wobei die untere Antriebswalze (22) und die untere Mitlaufwalze (23) jeweils an dem Gestell (10) angeordnet sind, ein Zuführbereich (70) oberhalb der unteren Mitlaufwalze (23) und des unteren Stahlbands (24) angeordnet ist und ein unteres Heizmodul auf einer der unteren Antriebswalze (22) abgewandten Seite der unteren Mitlaufwalze (23) angeordnet ist,
wobei die obere Stahlbandbaugruppe (30) eine obere Antriebswalze (32), eine obere Mitlaufwalze (33) und ein um die obere Antriebswalze (32) und die obere Mitlaufwalze (33) herumgeführtes oberes Stahlband (34) umfasst, wobei die obere Antriebswalze (32) und die obere Mitlaufwalze (33) jeweils an dem Gestell (10) angeordnet sind, die obere Antriebswalze (32) der unteren Antriebswalze (22) zugeordnet ist, die obere Mitlaufwalze (33) zwischen der oberen Antriebswalze (32) und dem Zuführbereich (70) angeordnet ist und zwischen dem oberen Stahlband (34) und dem unteren Stahlband (24) ein Spalt besteht, dessen Breite entlang der Richtung von der oberen Mitlaufwalze (33) zu der oberen Antriebswalze (32) allmählich abnimmt, und wobei ein oberes Heizmodul auf einer der oberen Antriebswalze (32) abgewandten Seite der oberen Mitlaufwalze (33) angeordnet ist,
wobei die Heizeinrichtung (40) an der Innenseite des unteren Stahlbands (24) und unterhalb der oberen Mitlaufwalze (33) angeordnet ist,
wobei die Kalandriereinrichtung zwischen der unteren Antriebswalze (22), der oberen Antriebswalze (32) und der oberen Mitlaufwalze (33) angeordnet ist und
wobei das untere Heizmodul eine untere Heizabdeckung (27) und ein unteres Heizrohr (272) umfasst, wobei die untere Heizabdeckung (27) den Außenumfang der unteren Mitlaufwalze (23) umgibt, die untere Heizabdeckung (27) auf einer nahe der unteren Mitlaufwalze (23) liegenden Seite eine Öffnung aufweist und diese Seite das untere Stahlband (24) nicht berührt, die Öffnung dem unteren Stahlband (24) zugeordnet ist, ein unteres Montageteil (271) in der unteren Heizabdeckung (27) angeordnet ist und das untere Heizrohr (272) in dem unteren Montageteil (271) angeordnet ist.

2. Trockenelektroden-Doppelstahlbandvorrichtung zur Bildung selbsttragender Folien nach Anspruch 1, **dadurch gekennzeichnet, dass** die untere Stahlbandbaugruppe (20) ferner ein unteres Antriebsmodul zum Drehantrieb der unteren Antriebswalze (22) umfasst, wobei das untere Antriebsmodul einen unteren Antriebsmotor (25) und ein mit dem unteren Antriebsmotor (25) verbundenes unteres Untersetzungsgetriebe (26) umfasst und das untere Untersetzungsgetriebe (26) mit einem Ende der unteren Antriebswalze (22) verbunden ist.

3. Trockenelektroden-Doppelstahlbandvorrichtung zur Bildung selbsttragender Folien nach Anspruch 1, **dadurch gekennzeichnet, dass** die obere Stahlbandbaugruppe (30) ferner ein oberes Antriebsmodul zum Drehantrieb der oberen Antriebswalze (32) umfasst, wobei das obere Antriebsmodul einen oberen Antriebsmotor (35) und ein mit dem oberen Antriebsmotor (35) verbundenes oberes Untersetzungsgetriebe (36) umfasst und das obere Untersetzungsgetriebe (36) mit einem Ende der oberen Antriebswalze (32) verbunden ist.

4. Trockenelektroden-Doppelstahlbandvorrichtung zur Bildung selbsttragender Folien nach Anspruch 1, **dadurch gekennzeichnet, dass** das obere Heizmodul eine obere Heizabdeckung (37) und ein oberes Heizrohr (372) umfasst, wobei die obere Heizabdeckung (37) den Außenumfang der oberen Mitlaufwalze (33) umgibt, die obere Heizabdeckung (37) auf einer nahe der oberen Mitlaufwalze (33) liegenden Seite eine Öffnung aufweist und diese Seite das obere Stahlband (34) nicht berührt, die Öffnung dem oberen Stahlband (34) zugeordnet ist, ein oberes Montageteil (371) in der oberen Heizabdeckung (37) angeordnet ist und das obere Heizrohr (372) in dem oberen Montageteil (371) angeordnet ist.

5. Trockenelektroden-Doppelstahlbandvorrichtung zur Bildung selbsttragender Folien nach Anspruch 1, **dadurch gekennzeichnet, dass** die Heizeinrichtung (40) eine an dem Gestell (10) angeordnete Halterung (42) und ein an dem oberen Ende der Halterung (42) angeordnetes Heizelement (43) umfasst, wobei das Heizelement (43) dem unteren Stahlband (24) zugeordnet ist und zwischen dem Heizelement (43) und dem unteren Stahlband (24) ein Spalt besteht.

6. Trockenelektroden-Doppelstahlbandvorrichtung zur Bildung selbsttragender Folien nach Anspruch 5, **dadurch gekennzeichnet, dass** das Heizelement (43) ein Keramikheizelement ist.

7. Trockenelektroden-Doppelstahlbandvorrichtung zur Bildung selbsttragender Folien nach Anspruch 1, **dadurch gekennzeichnet, dass** die Kalandriereinrichtung mindestens zwei Zweiwalzen-Kalandrierbaugruppen, nämlich eine erste Zweiwalzen-Kalandrierbaugruppe und eine zweite Zweiwalzen-Kalandrierbaugruppe, umfasst, wobei die erste Zweiwalzen-Kalandrierbaugruppe zwischen der oberen Mitlaufwalze (33) und der zweiten Zweiwalzen-Kalandrierbaugruppe angeordnet ist.

8. Trockenelektroden-Doppelstahlbandvorrichtung zur Bildung selbsttragender Folien nach Anspruch 7, **dadurch gekennzeichnet, dass** die erste Zweiwalzen-Kalandrierbaugruppe eine erste untere Kalandrierwalze (52), eine erste obere Kalandrierwalze (53) und zwei erste Antriebsmodule umfasst, wobei die erste obere Kalandrierwalze (53) und die erste untere Kalandrierwalze (52) übereinander und einander gegenüberliegend angeordnet sind und die erste untere Kalandrierwalze (52) an dem Gestell (10) sowie an der Innenseite des unteren Stahlbands (24) angeordnet ist, an dem unteren Stahlband (24) anliegt und die erste untere Kalandrierwalze (52) gegenüber dem Gestell (10) ortsfest ist, wobei die erste obere Kalandrierwalze (53) an dem Gestell (10) sowie an der Innenseite des oberen Stahlbands (34) angeordnet ist, an dem oberen Stahlband (34) anliegt und relativ zu dem Gestell (10) nach oben und unten gleitend verschiebbar ist und wobei die zwei ersten Antriebsmodule zum gleitenden Verschieben der ersten oberen Kalandrierwalze (53) nach oben und unten dienen.

9. Trockenelektroden-Doppelstahlbandvorrichtung zur Bildung selbsttragender Folien nach Anspruch 8, **dadurch gekennzeichnet, dass** die erste untere Kalandrierwalze (52) und die erste obere Kalandrierwalze (53) Heizwalzen sind.

10. Trockenelektroden-Doppelstahlbandvorrichtung zur Bildung selbsttragender Folien nach Anspruch 7, **dadurch gekennzeichnet, dass** die zweite Zweiwalzen-Kalandrierbaugruppe eine zweite untere Kalandrierwalze (62), eine zweite obere Kalandrierwalze (63) und zwei zweite Antriebsmodule umfasst, wobei die zweite obere Kalandrierwalze (63) und die zweite untere Kalandrierwalze (62) übereinander und einander gegenüberliegend angeordnet sind und die zweite untere Kalandrierwalze (62) an dem Gestell (10) sowie an der Innenseite des unteren Stahlbands angeordnet ist, an dem unteren Stahlband (24) anliegt und die zweite untere Kalandrierwalze (62) gegenüber dem Gestell (10) ortsfest ist, wobei die zweite obere Kalandrierwalze (63) an dem Gestell (10) sowie an der Innenseite des oberen Stahlbands (34) angeordnet ist, an dem oberen Stahlband (34) anliegt und relativ zu dem Gestell (10) nach oben und unten gleitend verschiebbar ist und wobei die zwei zweiten Antriebsmodule zum gleitenden Verschieben der zweiten oberen Kalandrierwalze (63) nach oben und unten dienen.

11. Trockenelektroden-Doppelstahlbandvorrichtung zur Bildung selbsttragender Folien nach Anspruch 10, **dadurch gekennzeichnet, dass** die zweite untere Kalandrierwalze (62) und die zweite obere Kalandrierwalze (63) Heizwalzen sind.

12. Verfahren zur Bildung einer selbsttragenden Folie für Trockenelektroden mittels zweier Stahlbänder unter Verwendung der Trockenelektroden-Doppelstahlbandvorrichtung zur Bildung selbsttragender Folien nach Anspruch 1, **dadurch gekennzeichnet, dass** es die folgenden Schritte umfasst:
Antreiben einer unteren Antriebswalze (22) zur Drehung, wodurch ein unteres Stahlband (24) umläuft und eine untere Mitlaufwalze (23) rotiert, und synchrones Antreiben einer oberen Antriebswalze (32) zur Drehung in einer entgegengesetzten Richtung, wodurch ein oberes Stahlband (34) in einer entgegengesetzten Richtung umläuft und eine obere Mitlaufwalze (33) in einer entgegengesetzten Richtung rotiert;
Erwärmen des unteren Stahlbands (24) mittels eines unteren Heizmoduls und Erwärmen des oberen Stahlbands (34) mittels eines oberen Heizmoduls;
Aufgeben von Elektrodenpulver auf das untere Stahlband (34) über einen Zuführbereich (70), um das Elektrodenpulver mittels des unteren Stahlbands (34) zu erwärmen, Befördern des Elektrodenpulvers mittels des unteren Stahlbands (24) in Richtung auf die untere Antriebswalze (22) und die obere Antriebswalze (32) sowie Erwärmen des unteren Stahlbands (24) mittels einer Heizeinrichtung (40), während das untere Stahlband (24) das Elektrodenpulver in Richtung auf die untere Antriebswalze (22) und die obere Antriebswalze (32) befördert;
Erwärmen des Elektrodenpulvers mittels des oberen Stahlbands (34), wenn das Elektrodenpulver in den Spalt zwischen dem oberen Stahlband (34) und dem unteren Stahlband (24) eintritt, Verpressen des Elektrodenpulvers mittels des oberen Stahlbands (34) und des unteren Stahlbands (24) zur Bildung einer selbsttragenden Elektrodenfolie, wobei sich die gebildete selbsttragende Elektrodenfolie, angetrieben durch das obere Stahlband (34) und das untere Stahlband (24), in Richtung auf die untere Antriebswalze (22) und die obere Antriebswalze (23) bewegen kann;
und Verpressen der selbsttragenden Elektrodenfolie mittels einer Kalandriereinrichtung, sodass die selbsttragende Elektrodenfolie verdichtet, in ihrer Dicke reduziert und korrigiert werden kann, um die erforderliche selbsttragende Elektrodenfolie zu erhalten.

## Revendications

1. Appareil à double bande d'acier à électrode sèche pour former des films autoportants comprenant un châssis (10), **caractérisé en ce qu'**il comprend un mécanisme à bande d'acier inférieur (20), un mécanisme à bande d'acier supérieur (30) agencé au-dessus du mécanisme à bande d'acier inférieur (20), un mécanisme de chauffage (40) et un mécanisme de calandrage ;
le mécanisme à bande d'acier inférieur (20) comprend un rouleau d'entraînement inférieur (22), un rouleau entraîné inférieur (23) et une bande d'acier inférieure (24) manchonnée sur le rouleau d'entraînement inférieur (22) et le rouleau entraîné inférieur (23), dans lequel le rouleau d'entraînement inférieur (22) et le rouleau entraîné inférieur (23) sont respectivement agencés sur le châssis (10) ; une zone d'alimentation (70) est agencée au-dessus du rouleau entraîné inférieur (23) et de la bande d'acier inférieure (24), et un module de chauffage inférieur est agencé sur un côté du rouleau entraîné inférieur (23) opposé au rouleau d'entraînement inférieur (22) ;
le mécanisme à bande d'acier supérieur (30) comprend un rouleau d'entraînement supérieur (32), un rouleau entraîné supérieur (33) et une bande d'acier supérieure (34) manchonnée sur le rouleau d'entraînement supérieur (32) et le rouleau entraîné supérieur (33), dans lequel le rouleau d'entraînement supérieur (32) et le rouleau entraîné supérieur (33) sont respectivement agencés sur le châssis (10) ; le rouleau d'entraînement supérieur (32) correspond au rouleau d'entraînement inférieur (22) ; le rouleau entraîné supérieur (33) est agencé entre le rouleau d'entraînement supérieur (32) et la zone d'alimentation (70) ; et un espace existe entre la bande d'acier supérieure (34) et la bande d'acier inférieure (24) ; et la largeur de l'espace diminue progressivement le long de la direction allant du rouleau entraîné supérieur (33) au rouleau d'entraînement supérieur (32) ; et un module de chauffage supérieur est agencé sur un côté du rouleau entraîné supérieur (33) à l'opposé du rouleau d'entraînement supérieur (32) ;
le mécanisme de chauffage (40) est agencé sur le côté intérieur de la bande d'acier inférieure (24) et sous le rouleau entraîné supérieur (33) ;
le mécanisme de calandrage est agencé entre le rouleau d'entraînement inférieur (22), le rouleau d'entraînement supérieur (32) et le rouleau entraîné supérieur (33) ; et
le module de chauffage inférieur comprend un capot de chauffage inférieur (27) et un tube chauffant inférieur (272), dans lequel le capot de chauffage inférieur (27) entoure la périphérie extérieure du rouleau entraîné inférieur (23) ; et un côté du capot de chauffage inférieur (27) à proximité du rouleau entraîné inférieur (23) comporte une ouverture et n'est pas en contact avec la bande d'acier inférieure (24) ; et l'ouverture correspond à la bande d'acier inférieure (24) ; et une partie de montage inférieure (271) est agencée dans le capot de chauffage inférieur (27) ; et le tube chauffant inférieur (272) est agencé dans la partie de montage inférieure (271).

2. Appareil à double bande d'acier à électrode sèche pour former des films autoportants selon la revendication 1, **caractérisé en ce que** le mécanisme à bande d'acier inférieur (20) comprend en outre un module d'entraînement inférieur pour entraîner le rouleau d'entraînement inférieur (22) en rotation ; et le module d'entraînement inférieur comprend un moteur d'entraînement inférieur (25) et un réducteur inférieur (26) relié au moteur d'entraînement inférieur (25) ; et le réducteur inférieur (26) est relié à une extrémité du rouleau d'entraînement inférieur (22).

3. Appareil à double bande d'acier à électrode sèche pour former des films autoportants selon la revendication 1, **caractérisé en ce que** le mécanisme à bande d'acier supérieur (30) comprend en outre un module d'entraînement supérieur pour entraîner le rouleau d'entraînement supérieur (32) en rotation ; et le module d'entraînement supérieur comprend un moteur d'entraînement supérieur (35) et un réducteur supérieur (36) relié au moteur d'entraînement supérieur (35) ; et le réducteur supérieur (36) est relié à une extrémité du rouleau d'entraînement supérieur (32).

4. Appareil à double bande d'acier à électrode sèche pour former des films autoportants selon la revendication 1, **caractérisé en ce que** le module de chauffage supérieur comprend un capot de chauffage supérieur (37) et un tube chauffant supérieur (372), dans lequel le capot de chauffage supérieur (37) entoure la périphérie extérieure du rouleau entraîné supérieur (33) ; et un côté du capot de chauffage supérieur (37) à proximité du rouleau entraîné supérieur (33) comporte une ouverture et n'est pas en contact avec la bande d'acier supérieure (34) ; et l'ouverture correspond à la bande d'acier supérieure (34) ; et une partie de montage supérieure (371) est agencée dans le capot de chauffage supérieur (37) ; et le tube chauffant supérieur (372) est agencé dans la partie de montage supérieure (371).

5. Appareil à double bande d'acier à électrode sèche pour former des films autoportants selon la revendication 1, **caractérisé en ce que** le mécanisme de chauffage (40) comprend un support (42) agencé sur le châssis (10) et un réchauffeur (43) agencé à l'extrémité supérieure du support (42) ; et le réchauffeur (43) correspond à la bande d'acier inférieure (24) ; et un espace existe entre le réchauffeur (43) et la bande d'acier inférieure (24).

6. Appareil à double bande d'acier à électrode sèche pour former des films autoportants selon la revendication 5, **caractérisé en ce que** le réchauffeur (43) est un réchauffeur en céramique.

7. Appareil à double bande d'acier à électrode sèche pour former des films autoportants selon la revendication 1, **caractérisé en ce que** le mécanisme de calandrage comprend au moins deux ensembles de calandrage à deux rouleaux, à savoir un premier ensemble de calandrage à deux rouleaux et un second ensemble de calandrage à deux rouleaux ; et le premier ensemble de calandrage à deux rouleaux est agencé entre le rouleau entraîné supérieur (33) et le second ensemble de calandrage à deux rouleaux.

8. Appareil à double bande d'acier à électrode sèche pour former des films autoportants selon la revendication 7, **caractérisé en ce que** le premier ensemble de calandrage à deux rouleaux comprend un premier rouleau de calandrage inférieur (52), un premier rouleau de calandrage supérieur (53) et deux premiers modules d'entraînement, dans lequel le premier rouleau de calandrage supérieur (53) et le premier rouleau de calandrage inférieur (52) sont agencés de manière opposée vers le haut et vers le bas ; et le premier rouleau de calandrage inférieur (52) est agencé sur le châssis (10), agencé sur le côté intérieur de la bande d'acier inférieure (24) et en butée contre la bande d'acier inférieure (24) ; et le premier rouleau de calandrage inférieur (52) est relativement fixe avec le châssis (10) ; le premier rouleau de calandrage supérieur (53) est agencé sur le châssis (10), agencé sur le côté intérieur de la bande d'acier supérieure (34) et en butée contre la bande d'acier supérieure (34), et peut coulisser vers le haut et vers le bas par rapport au châssis (10) ; et les deux premiers modules d'entraînement sont utilisés pour entraîner le premier rouleau de calandrage supérieur (53) à coulisser vers le haut et vers le bas.

9. Appareil à double bande d'acier à électrode sèche pour former des films autoportants selon la revendication 8, **caractérisé en ce que** le premier rouleau de calandrage inférieur (52) et le premier rouleau de calandrage supérieur (53) sont des rouleaux chauffants.

10. Appareil à double bande d'acier à électrode sèche pour former des films autoportants selon la revendication 7, **caractérisé en ce que** le second ensemble de calandrage à deux rouleaux comprend un second rouleau de calandrage inférieur (62), un second rouleau de calandrage supérieur (63) et deux seconds modules d'entraînement, dans lequel le second rouleau de calandrage supérieur (63) et le second rouleau de calandrage inférieur (62) sont agencés de manière opposée vers le haut et vers le bas ; et le second rouleau de calandrage inférieur (62) est agencé sur le châssis (10), agencé sur le côté intérieur de la bande d'acier inférieure et en butée contre la bande d'acier inférieure (24) ; et le second rouleau de calandrage inférieur (62) est relativement fixe avec le châssis (10) ; le second rouleau de calandrage supérieur (63) est agencé sur le châssis (10), agencé sur le côté intérieur de la bande d'acier supérieure (34) et en butée contre la bande d'acier supérieure (34), et peut coulisser vers le haut et vers le bas par rapport au châssis (10) ; et les deux seconds modules d'entraînement sont utilisés pour entraîner le second rouleau de calandrage supérieur (63) à coulisser vers le haut et vers le bas.

11. Appareil à double bande d'acier à électrode sèche pour former des films autoportants selon la revendication 10, **caractérisé en ce que** le second rouleau de calandrage inférieur (62) et le second rouleau de calandrage supérieur (63) sont des rouleaux chauffants.

12. Procédé de formation de film autoportant à double bande d'acier à électrode sèche utilisant l'appareil à double bande d'acier à électrode sèche pour former des films autoportants selon la revendication 1, **caractérisé en ce qu'**il comprend les étapes suivantes :
entraîner un rouleau d'entraînement inférieur (22) en rotation, faisant ainsi tourner une bande d'acier inférieure (24) et un rouleau entraîné inférieur (23), et entraîner de manière synchrone un rouleau d'entraînement supérieur (32) en rotation dans une direction opposée, faisant ainsi tourner une bande d'acier supérieure (34) et un rouleau entraîné supérieur (33) dans une direction opposée ;
chauffer la bande d'acier inférieure (24) à travers un module de chauffage inférieur et chauffer la bande d'acier supérieure (34) à travers un module de chauffage supérieur ;
ajouter une poudre d'électrode à la bande d'acier inférieure (34) à travers une zone d'alimentation (70), de manière à chauffer la poudre d'électrode à travers la bande d'acier inférieure (34), entraîner la poudre d'électrode à se déplacer vers la direction proche du rouleau d'entraînement inférieur (22) et du rouleau d'entraînement supérieur (32) à travers la bande d'acier inférieure (24), et chauffer la bande d'acier inférieure (24) à travers un mécanisme de chauffage (40) lorsque la bande d'acier inférieure (24) entraîne la poudre d'électrode à se déplacer vers la direction proche du rouleau d'entraînement inférieur (22) et du rouleau d'entraînement supérieur (32) ;
chauffer la poudre d'électrode au moyen de la bande d'acier supérieure (34) lorsque la poudre d'électrode pénètre dans l'espace entre la bande d'acier supérieure (34) et la bande d'acier inférieure (24), extruder la poudre d'électrode par la bande d'acier supérieure (34) et la bande d'acier inférieure (24) pour former un film autoportant d'électrode ; et le film autoportant d'électrode formé peut se déplacer vers la direction proche du rouleau d'entraînement inférieur (22) et du rouleau d'entraînement supérieur (23) sous l'entraînement de la bande d'acier supérieure (34) et de la bande d'acier inférieure (24) ; et
extruder le film autoportant d'électrode au moyen d'un mécanisme de calandrage, de sorte que le film autoportant d'électrode puisse être compacté, aminci et corrigé pour obtenir le film autoportant d'électrode requis.
